(19) Europäisches Patentamt
European Patent Office
Office européen des brevets

(11) **EP 4 510 240 A1**

(12) **EUROPEAN PATENT APPLICATION**
published in accordance with Art. 153(4) EPC

(43) Date of publication:
**19.02.2025   Bulletin 2025/08**

(21) Application number: 23788602.3

(22) Date of filing: **12.04.2023**

(51) International Patent Classification (IPC):
**H01M 4/62** (2006.01)      **H01M 4/13** (2010.01)
**H01M 10/052** (2010.01)

(52) Cooperative Patent Classification (CPC):
**H01M 4/13; H01M 4/62; H01M 10/052;** Y02E 60/10

(86) International application number:
**PCT/KR2023/004961**

(87) International publication number:
**WO 2023/200253 (19.10.2023 Gazette 2023/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **14.04.2022   KR 20220046365**

(71) Applicant: **LG Chem, Ltd.**
**Yeongdeungpo-gu**
**Seoul 07336 (KR)**

(72) Inventors:
 • **HAN, Seon Hee**
   **Daejeon 34122 (KR)**

 • **KANG, Min Ah**
   **Daejeon 34122 (KR)**
 • **HAN, Jung Sup**
   **Daejeon 34122 (KR)**
 • **RYU, Dong Jo**
   **Daejeon 34122 (KR)**
 • **WOO, Jungeun**
   **Daejeon 34122 (KR)**
 • **CHOI, Cheolhoon**
   **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **SECONDARY BATTERY BINDER COMPOSITION AND SECONDARY BATTERY ELECTRODE MIXTURE COMPRISING SAME**

(57)    A secondary battery binder composition includes: emulsion polymer particles A having a core-shell structure, which includes a core part and a shell part occupying a part or all of the surface of the core part; and emulsion polymer particles B having no core-shell structure. The binder composition satisfies $50 < N(A)/N(B) < 400$, wherein $N(A)$ is the number of emulsion polymer particles A having a core-shell structure, and $N(B)$ is the number of emulsion polymer particles B having no core-shell structure.

EP 4 510 240 A1

**Description**

TECHNICAL FIELD

The present disclosure relates to a binder composition for a secondary battery, an electrode mixture containing the same for a secondary battery, and a secondary battery.

BACKGROUND ART

In recent years, the technical development of and increasing demand for portable devices, such as portable computers, cellular phones, and cameras are rapidly elevating the need for secondary batteries as energy sources. Among these secondary batteries, lithium secondary batteries showing high energy density, high operating potential, long cycle lifespan, and low self-discharge rates, have been extensively researched and are commercially available and widely used.

In general, lithium secondary batteries, among the secondary batteries, are charged and discharged by repeated intercalation and de-intercalation of lithium ions of cathodes with respect to anodes. Such repeated intercalation and de-intercalation of lithium ions weakens the bonding between electrode active materials or conductive materials and increases contact resistance between particles. As a result, the ohmic resistance of electrodes may increase, causing deterioration in battery characteristics. Therefore, binders are preferably elastic polymers since the binders need to be able to function as a buffer against the expansion and contraction of electrode active materials resulting from the intercalation and de-intercalation of lithium ions with respect to the electrodes.

In addition, binders are required to have adhesive strength sufficient to maintain the binding strength between the electrode active materials and current collectors during drying of electrode plates. Particularly, when materials with high discharge capacity, such as silicon, tin, and silicon-tin alloys, are combined with natural graphite with a theoretical discharge capacity of 372 mAh/g in order to increase discharge capacity, the volume expansion of the materials significantly increases with the progress of charge and discharge, resulting in the separation of anode materials, and as a result, the battery capacity may be rapidly degraded with the progress of repeated cycles.

Hence, there is an urgent need for research in the art about binders and electrode materials that can prevent the separation between electrode active materials or between electrode active materials and current collectors during electrode manufacturing, and can promote the structural stability and the resultant battery performance even after hundreds of cycles by controlling the volume expansion of electrode active materials, caused upon repeated charge and discharge, through strong physical properties.

Furthermore, binders themselves may act as resistance, and thus the binders should not significantly affect resistance and ion conductivity. Since many specifications of medium or large-sized batteries require high power, resistance is one of the important properties of batteries and research on binders with low resistance is also urgently required.

TECHNICAL PROBLEM

An aspect of the present disclosure is to provide a binder for a secondary battery, capable of lowering the degree of contamination during the pressing for secondary battery electrodes to increase electrode productivity and securing high adhesive strength even upon high-rate coating to ultimately contribute to ensure the lifetime of secondary batteries.

Another aspect of the present disclosure is to provide a binder for a secondary battery, capable of solving the problem with respect to defects on surfaces of secondary battery electrodes resulting from roll contamination (the contamination of the surface of a roll due to the adsorption of an electrode active material, a conductive material, or the like onto the roll) that may occur during a pressing process, by inducing a sufficient binder distribution on the electrode surfaces.

TECHNICAL SOLUTION

In accordance with an aspect of the present disclosure, there is provided a binder composition for a secondary battery, including: core-shell-structured emulsion polymer particles A comprising a core portion and a shell portion occupying a part or an entirety of a surface of the core portion; and non-core-shell-structured emulsion polymer particles B, wherein the binder composition satisfies Relational Formula 1 below.

$$[\text{Relational Formula 1}]$$
$$50 < N(A)/N(B) < 400$$

In Relational Formula 1, N(A) is a number of core-shell-structured emulsion polymer particles A, and N(B) is a number of non-core-shell-structured emulsion polymer particles B.

In Relational Formula 1, N(A)/N(B) is determined by Relational Formula 2 below.

$$[\text{Relational Formula 2}]$$

$$N(A)/N(B) = \{D(B)/D(A)\}^3 \times \{X(A)/X(B)\}$$

In Relational Formula 2, D(A) is an average particle diameter (D50) of the core-shell-structured emulsion polymer particles A, D(B) represents the average particle diameter (D50) of the non-core-shell-structured emulsion polymer particles B, and X(A)/X(B) represents the mixing ratio of A to B.

More preferably, the core-shell-structured emulsion polymer particles A may have an average particle diameter (D50) of 100 nm or smaller.

More preferably, all the polymer particles included in the binder composition for a secondary battery may have an average particle diameter (D50) of 400 nm or smaller.

More preferably, the core-shell-structured emulsion polymer particles A may have a glass transition temperature (Tg) of lower than 0°C.

More preferably, the non-core-shell-structured emulsion polymer particles B may have a glass transition temperature (Tg) of lower than 0°C.

More preferably, the core portion of the core-shell-structured emulsion polymer particles A may contain a polymerization product of at least one monomer or polymer of: (Group A) a conjugated diene-based monomer or conjugated diene-based polymer; (Group B) at least one monomer selected from the group consisting of acrylate-based monomers, vinyl-based monomers, (meth)acrylamide-based monomers, and nitrile-based monomers; or (Group C) an unsaturated carboxylic acid-based monomer.

More preferably, the core portion of the core-shell-structured emulsion polymer particles A may contain a polymerization product of at least one monomer or polymer, in which relative to the total weight of the core portion, the monomer or polymer in (Group A) is contained in a content of 30 to 70 wt%, the monomer in (Group B) is contained in a content of 20 to 50 wt%, and the unsaturated carboxylic acid-based monomer in (Group C) is contained in a content of 0.5 to 20 wt%.

More preferably, the core portion of the core-shell-structured emulsion polymer particles A may contain styrene-butadiene latex.

More preferably, the shell portion of the core-shell-structured emulsion polymer particles A may contain a polymerization product of at least one monomer of: (Group A) a (meth)acrylic acid ester-based monomer; (Group B) at least one monomer selected from the group consisting of acrylate-based monomers, vinyl-based monomers, (meth) acrylamide-based monomers, and nitrile-based monomers; or (Group C) an unsaturated carboxylic acid-based monomer.

More preferably, the shell portion of the core-shell-structured emulsion polymer particles A may contain a polymerization product of at least monomer, in which relative to the total weight of the shell portion, the monomer in (Group A) is contained in a content of 50 to 90 wt%, the monomer in (Group B) is contained in a content of 0.5 to 30 wt%, and the unsaturated carboxylic acid-based monomer in (Group C) is contained in a content of 0.5 to 20 wt%.

In accordance with another aspect of the present disclosure, there is provided an electrode mixture for a secondary battery, including the binder composition for a secondary battery.

In accordance with still another aspect of the present disclosure, there is provided a secondary battery including the electrode mixture for a secondary battery.

## ADVANTAGEOUS EFFECTS

According to the present disclosure, a binder for a secondary battery is provided capable of lowering the degree of contamination during the pressing for secondary battery electrodes to increase electrode productivity and securing high adhesive strength even upon high-rate coating to ultimately contribute to ensure the lifetime of secondary batteries.

Furthermore, a binder for a secondary battery is provided capable of solving the problem with respect to defects on surfaces of secondary battery electrodes resulting from roll contamination (the contamination of the surface of a roll due to the adsorption of an electrode active material, a conductive material, or the like onto the roll) that may occur during a pressing process, by inducing a sufficient binder distribution on the electrode surfaces.

## DETAILED DESCRIPTION

As used herein, terms such as "comprising", "containing", and "including" should be understood as open-ended terms that imply the possibility of including other embodiments.

As used herein, the expressions "preferable" and "preferably" refer to embodiments of the present disclosure that may afford certain advantages under certain circumstances. However, other embodiments may also be preferable under the same or other circumstances. Furthermore, the recitation of one or more preferred embodiments does not imply that other embodiments are not useful, and is not intended to exclude other embodiments from the scope of the disclosure.

A binder composition for a secondary battery according to an embodiment of the present disclosure contains core-shell-structured emulsion polymer particles A each including: a core portion; and a shell portion occupying a part or the entirety of the surface of the core portion.

As used herein, the term core-shell structure means that the core and shell of a particle are different in terms of composition, structure, properties, or the like.

In an embodiment, the weight ratio of the core portion and the shell portion may be from 95:5 to 5:95, specifically from 90:10 to 10:90, more specifically from 90:10 to 30:70, and still more specifically from 90:10 to 50:50. The weight ratio is a ratio for the binder according to the present disclosure to exhibit optimal adhesive strength, and a weight ratio outside the above range is not preferable since desired effects of the present disclosure cannot be exhibited.

As used herein, the term emulsion polymer particle refers to a polymer particle obtained by emulsion polymerization in the presence of an emulsifier and a polymerization initiator, and the emulsion polymer particle may be prepared by a generally known emulsion polymerization method.

In an embodiment, the polymerization temperature and the polymerization time may be appropriately determined in some cases. For example, the polymerization temperature may be about 10°C to about 95°C, and the polymerization time may be about 0.5 hours to about 20 hours.

In an embodiment, the emulsifier usable in the emulsion polymerization may be at least one emulsifier selected from the group consisting of anionic emulsifiers, cationic emulsifiers, and non-ionic emulsifiers, but is not limited thereto. Such an emulsifier, which is a material having both a hydrophilic group and a hydrophobic group, forms a micelle structure and allows for polymerization of each monomer within the micelle structure, during emulsion polymerization.

In an embodiment, the polymerization initiator usable in the emulsion polymerization may be an inorganic or organic peroxide, and examples thereof may include water-soluble initiators including potassium persulfate, sodium persulfate, ammonium persulfate, and the like, and oil-soluble initiators including cumene hydroperoxide, benzoyl peroxide, and the like, but are not limited thereto.

In an embodiment, the binder composition may further contain an activator to promote the initiation of a reaction of a peroxide, together with the polymerization initiator, and at least one selected from the group consisting of sodium formaldehyde sulfoxylate, sodium ethylenediaminetetraacetate, ferrous sulfate, and dextrose may be used as an activator, but is not limited thereto.

The binder composition for a secondary battery according to an embodiment of the present disclosure contains emulsion polymer particles B when polymer particles, excluding the core-shell-structured emulsion polymer particles A among all the polymer particles contained in the binder composition for a secondary battery, are referred to polymer particles B. That is, the binder composition contains non-core-shell-structured polymer particles B.

The binder composition for a secondary battery of the present disclosure contains core-shell-structured emulsion polymer particles A and non-core-shell-structured polymer particles B, and thus can exhibit desired optimal effects of the present disclosure.

In a more preferable embodiment, the polymer particles B may be emulsion polymer particles.

When N(A) represents the number of core-shell-structured emulsion polymer particles A and N(B) represents the number of non-core-shell structured emulsion polymer particles B, the binder composition for a secondary battery satisfies Relational Formula 1 below.

$$[\text{Relational Formula 1}]$$
$$50 < N(A)/N(B) < 400$$

More preferably, the lower limit of N(A)/N(B) may be 100.

More preferably, the upper limit of N(A)/N(B) may be 300.

As can be confirmed in the experimental examples described later, desired optimal effects of the present disclosure can be exhibited in the above numerical ranges.

In a more preferable embodiment, the average particle diameter (D50) of the core-shell-structured emulsion polymer particles A may be 100 nm or smaller, more preferably 90 nm or smaller, and still more preferably 80 nm or smaller. As can be confirmed in the experimental examples described later, desired optimal effects of the present disclosure can be exhibited in the above numerical ranges.

In a more preferable embodiment, all the polymer particles contained in the binder composition for a secondary battery may have an average particle diameter (D50) of 400 nm or smaller, and more preferably 300 nm or smaller. As can be confirmed in the experimental examples described later, desired optimal effects of the present disclosure can be exhibited in the above numerical ranges.

When the core-shell-structured emulsion polymer particles A and/or the polymer particles B are emulsion particles, the average particle diameter (D50) of the polymer particles B may be adjusted by the amount of the emulsifier. It is a general tendency that the particle size decreases with an increasing amount of the emulsifier and the particle size increases with a decreasing amount of the emulsifier. A desired average particle diameter may be implemented by adjusting the amount of emulsifier used in consideration of a desired particle size, reaction time, reaction stability, and the like.

In a more preferable embodiment, the glass transition temperature (Tg) of the core-shell-structured emulsion polymer particles A may be lower than 0°C, lower than -5°C, lower than -10°C, or lower than -15°C. As can be confirmed in the experimental examples described later, desired optimal effects of the present disclosure can be exhibited in the above numerical ranges.

In a more preferable embodiment, the glass transition temperature (Tg) of the non-core-shell-structured emulsion polymer particles B may be lower than 0°C, lower than -5°C, or lower than -10°C. As can be confirmed in the experimental examples described later, desired optimal effects of the present disclosure can be exhibited in the above numerical ranges.

In a more preferable embodiment, the gel content of the core-shell-structured emulsion polymer particles A and/or the non-core-structured emulsion polymer particles B may be 95% or more. More preferably, the gel content of the core-shell-structured emulsion polymer particles A and/or the non-core-shell-structured emulsion polymer particles B may be from 95 to 99%, from 95 to 98%, or from 96 to 97.5%. A gel content of less than 95% in the core-shell-structured emulsion polymer particles A and/or the non-core-shell-structured emulsion polymer particles B may result in increased swelling in an electrolyte, causing a deterioration of battery lifetime.

Particularly, the gel content is calculated by Equation 1 below.

$$[\text{Equation 1}]$$

$$\text{Gel content (\%)} = M_b/M_a \times 100$$

In Equation 1, $M_a$ represents the weight of an emulsion polymer particle sample as measured after drying at 80°C for 24 hours, and $M_b$ represents the weight of emulsion polymer particles remaining on a mesh after the weighed emulsion particle sample is immersed in 50 g of tetrahydrofuran (THF) for 24 hours or longer, filtered through 200-mesh, and then dried together with the mesh at 80°C for 24 hours.

The gel content of the emulsion polymer particles, which means the crosslinking degree of the copolymer, is calculated by Equation 1 above and expressed as an insoluble fraction in the electrolyte.

In a more preferable embodiment, the core portion of the core-shell-structured emulsion polymer particles A may contain a polymerization product of at least one monomer or polymer selected from: (Group A) a conjugated diene-based monomer or conjugated diene-based polymer; (Group B) at least one monomer selected from the group consisting of acrylate-based monomers, vinyl-based monomers, (meth)acrylamide-based monomers, and nitrile-based monomers; and (Group C) an unsaturated carboxylic acid-based monomer.

As a non-limiting example, the conjugated diene-based monomer in (Group A) may be at least one monomer selected from the group consisting of 1,3-butadiene, isoprene, chloroprene, and piperylene.

As a non-limiting example, the conjugated diene-based polymer may be a polymer of two or more monomers selected from the group consisting of 1,3-butadiene, isoprene, chloroprene, and piperylene, a styrene-butadiene copolymer, an acrylonitrile-butadiene copolymer, a styrene-isoprene copolymer, an acrylate-butadiene rubber, an acrylonitrile-butadiene-styrene rubber, an ethylene-propylene-diene polymer, or a partially hydrogenated, epoxidized, or brominated polymer of the foregoing polymers, or mixtures of the foregoing polymers.

As a non-limiting example, the acrylate-based monomer in group (B) may be at least one monomer selected from the group consisting of methacryloxy ethylethyleneurea, β-carboxy ethyl acrylate, aliphatic monoacrylate, dipropylene diacrylate, ditrimethylolpropane tetraacrylate, dipentaerythriol hexaacrylate, pentaerythriol triacrylate, pentaerythriol tetraacrylate, and glycidyl methacrylate.

As a non-limiting example, the vinyl-based monomer may be at least one monomer selected from the group consisting of styrene, α-methylstyrene, β-methylstyrene, p-t-butylstyrene, and divinyl benzene.

As a non-limiting example, the (meth)acrylamide-based monomer may be at least one monomer selected from the group consisting of acrylamide, n-methylol acrylamide, n-butoxy methyl acrylamide, methacrylamide, n-methylol methacrylamide, and n-butoxy methyl methacrylamide.

As a non-limiting example, the nitrile-based monomer may be an alkenyl cyanide and, specifically, may be at least one monomer selected from the group consisting of acrylonitrile, methacrylonitrile, and allyl cyanides.

As a non-limiting example, the unsaturated carboxylic acid-based monomer in group (C) may be at least one monomer selected from the group consisting of maleic acid, fumaric acid, methacrylic acid, acrylic acid, glutaconic acid, itaconic acid, tetrahydrophthalic acid, crotonic acid, isochrotonic acid, and nadic acid.

More preferably, the core portion of the core-shell-structured emulsion polymer particles A may contain all the polymers of the conjugated diene-based monomer or conjugated diene-based polymer in (Group A), the vinyl-based monomers in (Group B), and the unsaturated carboxylic acid-based monomer in (Group C).

In a more preferable embodiment, the core portion of the core-shell-structured emulsion polymer particles A may contain a polymerization product of monomer(s) or polymer(s), in which relative to the total weight of the core portion, the monomer or polymer in (Group A) is contained in a content of from 30 to 70 wt%, the monomer in (Group B) is contained in a content of from 20 to 50 wt%, and the unsaturated carboxylic acid-based monomer in (Group C) is contained in a content of from 0.5 to 20 wt%.

In a more preferable embodiment, the core portion of the core-shell-structured emulsion polymer particles A may be styrene-butadiene latex. The binder composition for a secondary battery of the present disclosure contains core-shell-structured emulsion polymer particles and thus can exhibit desired optimal effects of the present disclosure.

In a more preferable embodiment, the shell portion of the core-shell-structured emulsion polymer particles A may contain a polymerization product of monomer(s) or polymer(s) selected from: (Group A) a (meth)acrylic acid ester-based monomer; (Group B) at least one monomer selected from the group consisting of acrylate-based monomers, vinyl-based monomers, (meth)acrylamide-based monomers, and nitrile-based monomers; and (Group C) an unsaturated carboxylic acid-based monomer.

As a non-limiting example, the (meth)acrylic acid ester-based monomer in (Group A) may be at least one monomer selected from the group consisting of allyl methacrylates, methyl acrylate, ethyl acrylate, propyl acrylate, isopropyl acrylate, n-butyl acrylate, isobutyl acrylate, n-amyl acrylate, isoamyl acrylate, n-ethylhexyl acrylate, 2-ethylhexyl acrylate, methyl methacrylate, ethyl methacrylate, propyl methacrylate, isopropyl methacrylate, n-butyl methacrylate, isobutyl methacrylate, n-amyl methacrylate, isoamyl methacrylate, n-hexyl methacrylate, n-ethylhexyl methacrylate, 2-ethylhexyl methacrylate lauryl acrylate, ceryl acrylate, stearyl acrylate, lauryl methacrylate, cetyl methacrylate, and stearyl methacrylate.

Non-limiting examples of the monomers in (group A) and (group B) are as described in the core portion of the core-shell-structured emulsion polymer particles A.

More preferably, the shell portion of the core-shell-structured emulsion polymer particles A may contain all the polymers of the (meth)acrylic acid ester-based monomer in (Group A), the vinyl-based monomer in (Group B), and the unsaturated carboxylic acid-based monomer in (Group C).

In a more preferable embodiment, the shell portion of the core-shell-structured emulsion polymer particles A may contain a polymerization product of monomer, in which relative to the total weight of the shell portion, the monomer in (Group A) is contained in a content of from 50 to 90 wt%, the monomer in (Group B) is contained in a content of from 0.5 to 30 wt%, and the unsaturated carboxylic acid-based monomer in (Group C) is contained in a content of from 0.5 to 20 wt%.

In the present disclosure, the binder composition for a secondary battery may further contain an anti-oxidant and a preservative. Especially, when the binder for a secondary battery of the present disclosure is used, the anti-oxidant may be preferably employed to reduce deterioration.

Furthermore, the binder composition for a secondary battery may further contain at least one material selected from the group consisting of a viscosity adjuster and a filler. The viscosity adjuster and filler will be described later in more detail.

An electrode mixture for a secondary battery according to an embodiment of the present disclosure contains the binder composition for a secondary battery and an electrode active material capable of lithium adsorption and desorption.

The electrode mixture for a secondary battery may further contain a conductive material. The conductive material will be described later in more detail.

A secondary battery according to an embodiment of the present disclosure may include an electrode for a secondary battery containing the electrode mixture for a secondary battery. The electrode for a secondary battery may be manufactured by applying the electrode mixture onto a current collector, followed by drying and rolling. The electrode for a secondary battery may be a cathode or an anode.

For example, the cathode may be manufactured by applying a mixture of a cathode active material, a conductive material, a binder, and the like onto a cathode current collector and then drying the same, and the anode is manufactured by applying a mixture of an anode active material, a conductive material, a binder, and the like onto an anode current collector and then drying the same. In some cases, the anode may not contain the conductive material.

The cathode active material, which is a lithium transition metal oxide, includes two or more transition metals, and examples thereof may include: layered compounds, such as lithium cobalt oxide ($LiCoO_2$) and lithium nickel oxide ($LiNiO_2$) substituted with one or more transition metals; lithium manganese oxides substituted with one or more transition metals; lithium nickel-based oxides represented by the chemical formula $LiNi_{1-y}M_yO_2$ (where M is one or more elements of Co, Mn, Al, Cu, Fe, Mg, B, Cr, Zn, or Ga, and $0.01 \leqq y \leqq 0.7$); lithium nickel cobalt manganese composite oxides represented by $Li_{1+z}Ni_bMn_cCo_{1-(b+c+d)}M_dO_{(2-e)}A_e$, such as $Li_{1+z}Ni_{1/3}Co_{1/3}Mn_{1/3}O_2$ or $Li_{1+z}Ni_{0.4}Mn_{0.4}Co_{0.2}O_2$ (where $-0.5 \leq z \leq 0.5$, $0.1 \leq b \leq 0.8$, $0.1 \leq c \leq 0.8$, $0 \leq d \leq 0.2$, $0 \leq e \leq 0.2$, b+c+d<1, M = Al, Mg, Cr, Ti, Si, or Y, and A = F, P, or Cl); and olivine-based lithium metal phosphates represented by the chemical formula $Li_{1+x}M_{1-y}M'_yPO_{4-z}X_z$ (where M = transition metal, preferably Fe, Mn, Co, or Ni, M' = Al, Mg, or Ti, X = F, S, or N, $-0.5^x^+0.5$, $0^y^0.5$, and $0 \leqq z \leqq 0.1$), but are not limited thereto.

Examples of the anode active material may include: carbon and graphite materials, such as natural graphite, artificial graphite, expanded graphite, carbon fibers, non-graphitizable carbon, carbon black, carbon nanotubes, fullerene, and activated carbon; metals alloyable with lithium, such as Al, Si, Sn, Ag, Bi, Mg, Zn, In, Ge, Pb, Pd, Pt, and Ti, and compounds including these elements; complexes of metals and compounds thereof and complexes of carbon and graphite materials; and lithium-containing nitrides. Among these, a carbon-based active material, a silicon-based active material, a tin-based active material, or a silicon-carbon-based active material is more preferable, which may be used alone or in combination of two or more thereof, and but is not limited thereto.

The conductive material, which is an ingredient to further enhance the conductivity of an electrode active material, may be added in an amount of from 0.01 to 30 wt% relative to the total weight of the electrode mixture. The conductive material is not particularly limited so long as it does not cause chemical changes in a corresponding battery while having conductivity. Examples thereof may include graphite, such as natural graphite or artificial graphite; carbon black, such as carbon black, acetylene black, Ketjen black, channel black, furnace black, lamp black, or thermal black; carbon derivatives, such as carbon nanotubes and fullerenes; conductive fibers, such as carbon fibers and metallic fibers; metallic powders, such as carbon fluoride powder, aluminum powder, and nickel powder; conductive whiskers, such as zinc oxide and potassium titanate; conductive metal oxides, such as titanium oxide; and conductive materials, such as polyphenylene derivatives.

The electrode current collectors of the electrodes are sites where electrons migrate in an electrochemical reaction of active materials, and the electrode current collectors are classified into a cathode current collector and an anode current collector.

The cathode current collector is formed with a thickness of 3-500 um. The cathode current collector is not particularly limited so long as it does not cause chemical changes in a corresponding battery while having conductivity. Examples thereof may include stainless steel, aluminum, nickel, titanium, fired carbon, and aluminum or stainless steel that is surface-treated with carbon, nickel, titanium, silver, or the like.

The anode current collector is formed with a thickness of 3-500 um. The anode current collector is not particularly limited so long as it does not cause chemical changes in a corresponding battery while having conductivity. Examples thereof may include copper, stainless steel, aluminum, nickel, titanium, sintered carbon, copper or stainless steel that is surface-treated with carbon, nickel, titanium, silver, or the like, and aluminum-cadmium alloys.

These current collectors may have fine irregularities on surfaces thereof to enhance the binding strength of the electrode active materials and may be used in various forms including a film, a sheet, a foil, a net, a porous structure, a foam, and a non-woven fabric.

The mixture (electrode mixture) containing an electrode active material, a conductive material, a binder, and the like may further contain at least one material selected from the group consisting of a viscosity adjuster and a filler.

The viscosity adjuster is an ingredient for adjusting the viscosity of an electrode mixture so as to facilitate a mixing process for the electrode mixture and a process of applying the electrode mixture onto a current collector, and may be added in an amount of up to 30 wt % relative to the total weight of the electrode mixture. Examples of the viscosity adjuster include carboxymethylcellulose, polyacrylic acid, and the like, but are not limited thereto.

The filler is an auxiliary ingredient to suppress the expansion of an electrode, and is not particularly limited so long as it is a fibrous material while not causing chemical changes in a corresponding battery. Examples thereof include: olefin-based polymers, such as polyethylene and polypropylene; and fibrous materials, such as glass fibers and carbon fibers.

The secondary battery of the present disclosure may further contain a separator and a lithium salt-containing non-aqueous electrolyte, in addition to the electrodes.

The separator is interposed between the cathode and the anode, and an insulating thin film having high ion permeability and mechanical strength is used therefor. The separator generally has a pore diameter of from 0.01 to 10 um and a thickness of from 5 to 300 um. As the separator, a sheet or non-woven fabric formed of a chemical-resistant and hydrophobic olefin-based polymer such as polypropylene, a glass fiber, or polyethylene, is used. When a solid electrolyte, such as a polymer, is used as an electrolyte, the solid electrolyte may serve as a separator.

The lithium salt is a material that is well dissolved in the non-aqueous electrolyte, and examples thereof may include LiCl, LiBr, LiI, LiClO$_4$, LiBF$_4$, LiB$_{10}$Cl$_{10}$, LiPF$_6$, LiCF$_3$SO$_3$, LiCF$_3$CO$_2$, LiAsF$_6$, LiSbF$_6$, LiAlCl$_4$, CH$_3$SO$_3$Li, (CF$_3$SO$_3$)$_3$NLi, chloroborane lithium, lower aliphatic carboxylic acid lithium, lithium tetraphenylborate, and imides, but are not limited thereto.

Examples of the non-aqueous electrolyte may include aprotic organic solvents, such as N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydroxy franc, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxymethane, dioxolane derivatives, sulfolane, methyl sulfolane, 1,3-dimethyl-2-imidazolidinone, propylene carbonate derivatives, tetrahydrofuran derivatives, ethers, methyl propionate, and ethyl propionates, but are not limited thereto.

In still another embodiment, an organic solid electrolyte, an inorganic solid electrolyte, or the like may be used.

Examples of the organic solid electrolyte may include polyethylene derivatives, polyethylene oxide derivatives, polypropylene oxide derivatives, phosphoric acid ester polymers, poly agitation lysine, polyester sulfide, polyvinyl alcohols, polyvinylidene fluoride, polymers containing ionic dissociation groups, and the like.

Examples of the inorganic solid electrolyte may include nitrides, halides, and sulfates of Li, such as Li3N, LiI, $Li_5NI_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH, and $Li_3PO_4$-$Li_2S$-$SiS_2$.

The lithium secondary battery according to the present disclosure may be used not only in a battery cell that is used as a power source for small devices, but also as a unit battery in medium or large battery modules including multiple battery cells.

Examples

Although the present disclosure will be described in more detail in the following examples and experimental examples, the present disclosure is not limited thereto.

<Preparation Examples of Emulsion Polymer Particles>

Preparation Example 1: Preparation of core-shell-structured emulsion polymer particles A1

First polymerization: Core portion forming

As monomers for core formation, 50 g of 1,3-butadiene, 35 g of styrene, 10 g of methyl methacrylate, and 5 g of a mixture of acrylic acid and itaconic acid at a ratio of 5:5 were used.

As a solvent, about 400 parts by weight of water was used relative to a total of 100 parts by weight of the monomer components.

To a nitrogen-substituted polymerization reactor, water, the monomers, and about 3 parts by weight of sodium lauryl sulfate as an emulsifier component relative to a total of 100 parts by weight of the monomer components were introduced, and then heated to about 75°C. Thereafter, 0.005 mol of potassium persulfate as a polymerization initiator was added thereto to initiate emulsion polymerization.

The polymerization was performed for about 7 hours while the temperature was maintained at about 75°C, thereby obtaining an emulsion-type binder.

Second polymerization: Shell portion forming

As additional monomers for shell forming, 69.9 g of n-butyl acrylate, 20.0 g of styrene, 10 g of methacrylic acid, and 0.1 g of an allyl methacrylate were used, and 933.3 g (based on 233.33 g of solids) of the emulsion polymer particle emulsion obtained in Preparation Example 1 was used.

To a nitrogen-substituted polymerization reactor, water, the monomers, the latex particle core by the first polymerization, and about 0.2 parts by weight of sodium polyoxyethylene lauryl ether sulfate as an emulsifier component relative to a total of 100 parts by weight of the monomer components were introduced, and then heated to about 80°C. Thereafter, 0.33 parts by weight of ammonium sulfate as a polymerization initiator relative to 100 parts by weight of the monomer components was added thereto to initiate emulsion polymerization.

The reaction was performed for about 5 hours while the temperature was maintained at about 80°C, thereby obtaining an emulsion-type binder containing core-shell-structured emulsion polymer particles (average particle diameter: 70 nm).

The pH was adjusted to 7 by using an aqueous sodium hydroxide solution.

Preparation Example 2: Preparation of core-shell-structured emulsion polymer particles A2

Core-shell-structured emulsion polymer particles A2 were prepared by the same method as in Preparation Example 1 except that 69.9 g of n-butyl acrylate, 25.0 g of styrene, 5 g of methacrylic acid, and 0.1 g of an allyl methacrylate were used as monomers for shell forming in the second polymerization (shell portion forming) in Preparation Example 1 (average particle diameter: 71 nm) .

Preparation Example 3: Preparation of core-shell-structured emulsion polymer particles A3

Core-shell-structured emulsion polymer particles A3 were prepared wherein the particles have a different average particle diameter (D50) as shown in Table 1 below by reducing the content of the emulsifier during the first polymerization in Preparation Example 1 (average particle diameter: 102 nm).

Preparation Example 4: Preparation of core-shell-structured emulsion polymer particles A4

Core-shell-structured emulsion polymer particles A4 were prepared by the same method as in Preparation Example 1 except that 34 g of 1,3-butadiene, 51 g of styrene, and 10 g of methyl acrylate, and 5 g of a mixture of acrylic acid and itaconic acid at a ratio of 5:5 were used as monomers for the first polymerization (for a core portion) in Preparation Example 1 (average particle diameter: 73 nm) .

Preparation Example 5: Preparation of emulsion polymer particles B1

As monomers, 56.8 g of 1,3-butadiene, 38.5 g of styrene, 3 g of methyl methacrylate, and 1.7 g of a mixture of acrylic acid and itaconic acid at a ratio of 5:5 were used.
As a solvent, about 150 parts by weight of water was used relative to a total of 100 parts by weight of the monomer components.
To a nitrogen-substituted polymerization reactor, water, the monomers, and about 1 parts by weight of sodium lauryl sulfate as an emulsifier component relative to a total of 100 parts by weight of the monomer components were introduced, and then heated to about 75°C. Thereafter, 0.005 mol of potassium persulfate as a polymerization initiator was added thereto to initiate emulsion polymerization.
The polymerization was performed for about 10 hours while the temperature was maintained at about 75°C. After the completion of the reaction, about 0.5 parts by weight of sodium lauryl sulfate as a stabilizing emulsifier was introduced to obtain an emulsion-type binder (average particle diameter: 261 nm).
The pH was adjusted to 7 by using an aqueous sodium hydroxide solution.

Preparation Example 6: Preparation of emulsion polymer particles B2

Emulsion polymer particles B2 were prepared wherein the particles have a different glass transition temperature (Tg) as shown in Table 1 below by reducing the amount of 1,3-butadiene introduced and increasing the content of styrene in Preparation Example 5 (average particle diameter: 262 nm).

Preparation Example 7: Preparation of Emulsion Polymer Particles B3

Emulsion polymer particles B3 with an average particle diameter of 184 nm were prepared by increasing the amount of sodium lauryl sulfate introduced in Preparation Example 5.

Experimental Example 1: Average particle diameters, glass transition temperatures (Tg), and gel contents of emulsion polymer particles

The emulsion polymer particles prepared in Preparation Examples 1 to 7 were measured for average particle diameter (D50), glass transition temperature (Tg), and gel content (%) by the following methods, and the measurement results are shown in Table 1.

Measurement of average particle diameter (D50)

A sample diluted to 200 ppm or less was prepared, and then measured for average particle diameter (D50) of particles by dynamic laser light scattering using Nicomp 380 at room temperature (23°C) according to the intensity Gaussian distribution.

Measurement of glass transition temperature (Tg)

The glass transition temperature was measured by using differential scanning calorimetry (DSC).

Measurement of gel content

An emulsion polymer particle sample was dried at 80°C for 24 hours, and then about 0.5 g was taken therefrom and accurately weighed. This weight was designated as $M_a$. Thereafter, the weighed emulsion polymer particle sample was immersed in 50 g of tetrahydrofuran (THF) for 24 hours. Thereafter, the emulsion polymer particle sample immersed in THF was filtered through 200-mesh with a known weight, and then, the weight of the mesh and the emulsion polymer remaining on the mesh was measured. From this value, the weight of the 200-mesh was subtracted to obtain the weight of the emulsion polymer remaining on the mesh. The resultant weight value was designated as $M_b$. The $M_a$ and $M_b$ value measured according to the above method were substituted into Equation 1 to calculate the gel content. Particularly, the gel content of each type of emulsion polymer particles was measured as an average value for three or more species for each sample.

$$[Equation\ 1]$$

$$Gel\ content\ (\%)\ =\ M_b/M_a\ \times\ 100$$

TABLE 1

| Emulsion polymer particles | Average particle diameter (D50) (nm) | Tg (°C) | Gel content (%) |
|---|---|---|---|
| A1 | 70 | -15.9 | 97.3 |
| A2 | 71 | -16.6 | 97.0 |
| A3 | 102 | -15.1 | 97.1 |
| A4 | 73 | 12.9 | 97.3 |
| B1 | 261 | -15.1 | 97.5 |
| B2 | 262 | 10.2 | 97.6 |
| B3 | 184 | -14.7 | 97.5 |

Examples 1 to 3 and Comparative Examples 1 to 6

Preparation of Mixture Binders

The prepared emulsion polymer particles were mixed according to the ratios of the numbers of particles shown in Table 2 below to prepare mixture binders of Examples 1 to 3 and Comparative Examples 1 to 6.

Manufacturing of electrode slurries and electrodes

Based on a total of 100 g of solids, each of the mixture binders (2.5 g) of Examples 1 to 3 and Comparative Examples 1 to 6 was mixed with artificial graphite (95.5 g), acetylene black (1 g), carboxymethyl cellulose (1 g) as a thickener, together with water as a dispersion medium, thereby preparing a slurry for an anode with a total content of solids of 48 wt%. The slurry was applied onto a copper foil to a thickness of 200 micrometers, vacuum dried, and pressed, thereby manufacturing an anode.

Experimental Example 2: Adhesive strength and colorimetric value after pressing of mixture binders

The mixture binders prepared by Examples 1 to 3 and Comparative Examples 1 to 6 were measured for adhesive strength (gf/cm) and colorimetric L value after pressing by the following methods. The measurement values are shown in Table 2 below.

Determination of N(A)/N(B)

A sample diluted to 200 ppm or less was prepared, and then measured for average particle diameter (D50) of particles by dynamic laser light scattering using Nicomp 380 at room temperature (23°C) according to the intensity Gaussian distribution. Thereafter, N(A)/N(B) was determined according to Relational Formula 2 below.

[Relational Formula 2]

$$N(A)/N(B) = \{D(B)/D(A)\}^3 \times \{X(A)/X(B)\}$$

In Relational Formula 2, D(A) represents an average particle diameter (D50) of particles A, D(B) represents an average particle diameter (D50) of particles B, and X(A)/X(B) represents the mixing ratio of A to B.

Measurement of adhesive strength (gf/cm)

After an anode plate was cut to a predetermined size and fixed to a slide glass, current collectors were peeled off and measured for 180° peeling strength, and then an average value was determined.

Measurement of colorimetric value

This measurement experiment was performed to evaluate the colorimetric value according to the contamination occurring due to roll sticking during a rolling process in each of electrodes manufactured in the examples and comparative examples.
Specifically, a press roll may be contaminated by a process where a coated anode (i.e., an anode slurry applied onto a current collector and then dried) is rolled by roll-press.
In cases where the colorimetric value is measured by allowing a colorimeter to closely adhere to the surface of the press roll, the colorimetric value is 80 when the press roll is very clean, but gradually decreases as contamination progresses, ultimately dropping to 40 when the press roll actually become contaminated, similarly to the surface of the electrode. In this regard, the colorimetric values of the surface of the press roll after each rolling process for Examples 1 to 3 and Comparative Examples 1 to 6 were measured.

TABLE 2

|  | Mixture binder | N (A)/N (B) | Adhesive strength (gf/cm) | Colorimetric value after pressing | Evaluation |
|---|---|---|---|---|---|
| Example 1 | A1/B1 | 207 | 48 | 78 |  |
| Example 2 | A1/B1 | 121 | 50 | 78 |  |
| Example 3 | A1/B1+B3 | 75 | 45 | 78 |  |
| Comparative Example 1 | A1/B1 | 34 | 53 | 53 | Defective electrode surface |
| Comparative Example 2 | A2/B1 | 116 | 37 | 71 | Unstable slurry |
| Comparative Example 3 | A3/B1 | 39 | 58 | 46 |  |
| Comparative Example 4 | A4/B1 | 107 | 41 | 69 |  |
| Comparative Example 5 | A1/B2 | 122 | 35 | 58 | Electrode detachment |
| Comparative Example 6 | A1/B1 | 466 | 31 | 54 | Electrode detachment |

As can be seen from Table 2, the colorimetric L value after pressing was significantly dropped to 60 or smaller in Comparative Examples 1, 3, and 6, of which the N(A)/N(B) value was out of the range of greater than 50 and smaller than 400. Especially, an electrode surface defect occurred in Comparative Example 1 and an electrode detachment occurred in Comparative Example 6.
Moreover, among Comparative Examples 1, 3, and 6, of which the N(A)/N(B) value was out of the range of greater than 50 and smaller than 400, Comparative Example 3, of which the average particle diameter (D50) of emulsion polymer particles A was larger than 100 nm, showed a colorimetric L value of 46 after pressing, which was the lowest.
Comparative Example 4, of which the glass transition temperature (Tg) of emulsion polymer particles A was 0°C or higher, showed an adhesive strength of 41 gf/cm, a significant decrease, and a colorimetric L value of 69 after pressing, a slight decrease.
Comparative Example 5, of which the glass transition temperature (Tg) of emulsion polymer particles B was 0°C or higher, showed an adhesive strength of 35 gf/cm, a significant decrease, and a colorimetric L value of 58 after pressing, a significant decrease. Moreover, an electrode detachment occurred.
However, Examples 1, 2, and 3, of which the N(A)/N(B) value was greater than 50 and smaller than 400, the average particle diameter (D50) of emulsion polymer particles A was 100 nm or smaller, the glass transition temperature (Tg) of emulsion polymer particles A was lower than 0°C, and the glass transition temperature (Tg) of emulsion polymer particles B was lower than 0°C, showed high adhesive strength, an excellent colorimetric value of 78 after pressing, and superior mechanical properties of electrodes due to the absence of particular defects on electrodes.

**Claims**

1. A binder composition for a secondary battery, comprising:

    core-shell-structured emulsion polymer particles A comprising a core portion and a shell portion occupying a part or an entirety of a surface of the core portion; and
    non-core-shell-structured emulsion polymer particles B,
    wherein the binder composition satisfies Relational Formula 1:

    $$[\text{Relational Formula 1}]$$
    $$50 < N(A)/N(B) < 400$$

    wherein N(A) is a number of the core-shell-structured emulsion polymer particles A; N(B) is a number of the non-core-shell-structured emulsion polymer particles B; and N(A)/N(B) is determined by Relational Formula 2:

    $$[\text{Relational Formula 2}]$$
    $$N(A)/N(B) = \{D(B)/D(A)\}^3 \times \{X(A)/X(B)\}$$

    wherein D(A) is an average particle diameter (D50) of the core-shell-structured emulsion polymer particles A; D(B) is an average particle diameter (D50) of the non-core-shell-structured emulsion polymer particles B; and X(A)/X(B) is a mixing ratio of the core-shell-structured emulsion polymer particles A to the non-core-shell-structured emulsion polymer particles B.

2. The binder composition of claim 1, wherein the core-shell-structured emulsion polymer particles A have an average particle diameter (D50) of 100 nm or smaller.

3. The binder composition of claim 1, wherein all the polymer particles included in the binder composition for a secondary battery have an average particle diameter (D50) of 400 nm or smaller.

4. The binder composition of claim 1, wherein the core-shell-structured emulsion polymer particles A have a glass transition temperature (Tg) of lower than 0°C.

5. The binder composition of claim 1, wherein the non-core-shell-structured emulsion polymer particles B have a glass transition temperature (Tg) of lower than 0°C.

6. The binder composition of claim 1, wherein the core portion of the core-shell-structured emulsion polymer particles A contains a polymerization product of at least one monomer or polymer of:

    (Group A) a conjugated diene-based monomer or a conjugated diene-based polymer;
    (Group B) at least one of acrylate-based monomers, vinyl-based monomers, (meth)acrylamide-based monomers, or nitrile-based monomers; or
    (Group C) an unsaturated carboxylic acid-based monomer.

7. The binder composition of claim 6, wherein the core portion of the core-shell-structured emulsion polymer particles A contains a polymerization product of at least one monomer or polymer, in which relative to the total weight of the core portion, the monomer or polymer in (Group A) is contained in a content of 30 to 70 wt%, the monomer in (Group B) is contained in a content of 20 to 50 wt%, and the unsaturated carboxylic acid-based monomer in (Group C) is contained in a content of 0.5 to 20 wt%.

8. The binder composition of claim 1, wherein the core portion of the core-shell-structured emulsion polymer particles A comprises styrene-butadiene latex.

9. The binder composition of claim 1, wherein the shell portion of the core-shell-structured emulsion polymer particles A comprises a polymerization product of at least one monomer of:

(Group A) a (meth)acrylic acid ester-based monomer;
(Group B) at least one of acrylate-based monomers, vinyl-based monomers, (meth)acrylamide-based monomers, or nitrile-based monomers; or
(Group C) an unsaturated carboxylic acid-based monomer.

10. The binder composition of claim 9, wherein the shell portion of the core-shell-structured emulsion polymer particles A contains a polymerization product of at least one monomer, in which relative to the total weight of the shell portion, the monomer in (Group A) is contained in a content of 50 to 90 wt%, the monomer in (Group B) is contained in a content of 0.5 to 30 wt%, and the unsaturated carboxylic acid-based monomer in (Group C) is contained in a content of 0.5 to 20 wt%.

11. An electrode mixture for a secondary battery, comprising the binder composition of claim 1.

12. A secondary battery comprising the electrode mixture of claim 11.

## INTERNATIONAL SEARCH REPORT

| International application No. |
|---|
| **PCT/KR2023/004961** |

| **A.     CLASSIFICATION OF SUBJECT MATTER** |
|---|
| **H01M 4/62**(2006.01)i; **H01M 4/13**(2010.01)i; **H01M 10/052**(2010.01)i |
| According to International Patent Classification (IPC) or to both national classification and IPC |

| **B.     FIELDS SEARCHED** |
|---|
| Minimum documentation searched (classification system followed by classification symbols) |
| H01M 4/62(2006.01); C08F 265/06(2006.01); H01G 11/38(2013.01); H01M 10/05(2010.01); H01M 10/052(2010.01); H01M 10/0525(2010.01); H01M 10/058(2010.01); H01M 2/16(2006.01); H01M 4/13(2010.01) |
| Documentation searched other than minimum documentation to the extent that such documents are included in the fields searched |
| Korean utility models and applications for utility models: IPC as above<br>Japanese utility models and applications for utility models: IPC as above |
| Electronic data base consulted during the international search (name of data base and, where practicable, search terms used) |
| eKOMPASS (KIPO internal) & keywords: 이차전지(secondary battery), 바인더(binder), 코어-쉘 구조(core-shell structure), 유화중합체(emulsion polymer), 입자수(number of particles), 유리전이온도(glass transition temperature), 입경(diameter) |

| **C.     DOCUMENTS CONSIDERED TO BE RELEVANT** | | |
|---|---|---|
| Category* | Citation of document, with indication, where appropriate, of the relevant passages | Relevant to claim No. |
| X<br><br>Y | JP 2017-098203 A (NIPPON ZEON CO., LTD.) 01 June 2017 (2017-06-01)<br>    See claims 1-2; and paragraphs [0008]-[0009], [0017], [0029]-[0031], [0035]-[0036], [0051] and [0073]. | 1,3,6,9,11-12<br><br>2,4-5,7-8,10 |
| Y | KR 10-2021-0004983 A (ZEON CORPORATION) 13 January 2021 (2021-01-13)<br>    See claim 1; and paragraphs [0104] and [0107]. | 2,4 |
| Y | KR 10-2017-0053615 A (ZEON CORPORATION) 16 May 2017 (2017-05-16)<br>    See claim 6; and paragraphs [0059]-[0077] and [0146]-[0147]. | 5,7 |
| Y | KR 10-2014-0138057 A (LG CHEM, LTD.) 03 December 2014 (2014-12-03)<br>    See claim 1; and paragraph [0069]. | 8,10 |
| A | KR 10-2019-0137818 A (ZEON CORPORATION) 11 December 2019 (2019-12-11)<br>    See claims 1-5; and paragraphs [0032] and [0037]. | 1-12 |

☐ Further documents are listed in the continuation of Box C.          ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **20 July 2023** | **21 July 2023** |
| Name and mailing address of the ISA/KR | Authorized officer |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/004961**

| Patent document cited in search report | | | Publication date (day/month/year) | Patent family member(s) | | | Publication date (day/month/year) |
|---|---|---|---|---|---|---|---|
| JP | 2017-098203 | A | 01 June 2017 | JP | 6808931 | B2 | 06 January 2021 |
| KR | 10-2021-0004983 | A | 13 January 2021 | CN | 112005412 | A | 27 November 2020 |
| | | | | EP | 3787078 | A1 | 03 March 2021 |
| | | | | EP | 3787078 | A4 | 19 January 2022 |
| | | | | JP | 2021-208419 | A1 | 13 May 2021 |
| | | | | JP | 7276326 | B2 | 18 May 2023 |
| | | | | US | 11362334 | B2 | 14 June 2022 |
| | | | | US | 2021-0305573 | A1 | 30 September 2021 |
| | | | | WO | 2019-208419 | A1 | 31 October 2019 |
| KR | 10-2017-0053615 | A | 16 May 2017 | CN | 106663813 | A | 10 May 2017 |
| | | | | CN | 106663813 | B | 08 December 2020 |
| | | | | JP | 2017-035286 | A1 | 15 June 2017 |
| | | | | JP | 6627763 | B2 | 08 January 2020 |
| | | | | KR | 10-2418499 | B1 | 06 July 2022 |
| | | | | US | 10290873 | B2 | 14 May 2019 |
| | | | | US | 2017-0256800 | A1 | 07 September 2017 |
| | | | | WO | 2016-035286 | A1 | 10 March 2016 |
| KR | 10-2014-0138057 | A | 03 December 2014 | CN | 104981927 | A | 14 October 2015 |
| | | | | CN | 104981927 | B | 08 June 2018 |
| | | | | EP | 3001487 | A1 | 30 March 2016 |
| | | | | EP | 3001487 | A4 | 09 November 2016 |
| | | | | EP | 3001487 | B1 | 18 October 2017 |
| | | | | KR | 10-1597745 | B1 | 25 February 2016 |
| | | | | US | 10044041 | B2 | 07 August 2018 |
| | | | | US | 2016-0156038 | A1 | 02 June 2016 |
| | | | | WO | 2014-189294 | A1 | 27 November 2014 |
| KR | 10-2019-0137818 | A | 11 December 2019 | CN | 110557970 | A | 10 December 2019 |
| | | | | EP | 3618144 | A1 | 04 March 2020 |
| | | | | EP | 3618144 | A4 | 30 December 2020 |
| | | | | JP | 2020-198940 | A1 | 12 March 2020 |
| | | | | JP | 7205465 | B2 | 17 January 2023 |
| | | | | US | 11258133 | B2 | 22 February 2022 |
| | | | | US | 2020-0127263 | A1 | 23 April 2020 |
| | | | | WO | 2018-198940 | A1 | 01 November 2018 |

Form PCT/ISA/210 (patent family annex) (July 2022)